# EUROPEAN PATENT SPECIFICATION

(11) **EP 2 581 661 B1**
(45) Date of publication and mention of the grant of the patent: **01.05.2019**
(21) Application number: 11792555.2
(22) Date of filing: 10.06.2011
(51) Int. Cl.: F23J 3/00, F23G 5/00, F23G 5/16, F23J 1/00, F23J 9/00, F23L 17/16, B04C 3/02, F04F 5/22, F04F 5/46

(54) **MELTING EQUIPMENT**
SCHMELZVORRICHTUNG
INSTALLATION DE FUSION

(30) Priority: 11.06.2010 JP 2010134194
(43) Date of publication of application: 17.04.2013
(73) Proprietor: Mitsubishi Heavy Industries Environmental & Chemical Engineering Co., Ltd., Kanagawa 220-0012 (JP)
(72) Inventor: SATO Jun, Tokyo 108-8215 (JP); KITTA Takehiro, Tokyo 108-8215 (JP); SHIRAI Toshimasa, Yokohama-shi Kanagawa 220-0012 (JP); SAITO Yoshihisa, Yokohama-shi Kanagawa 220-0012 (JP); YAEGASHI Eri, Yokohama-shi Kanagawa 220-0012 (JP)
(74) Representative: Intès, Didier Gérard André
(86) International application number: PCT/JP2011/063364
(87) International publication number: WO 2011/155598

(56) References cited:
- EP-A1- 0 074 461
- EP-A2- 1 379 613
- JP-A- 2001 147 009
- JP-A- 2002 364 600
- JP-A- 2003 161 411
- JP-A- 2003 161 411
- JP-A- 2004 163 034
- JP-A- 2004 531 683
- JP-U- H0 167 448
- US-A- 1 447 014
- US-A1- 2002 030 121
- US-A1- 2004 012 130
- US-B1- 6 969 250

## Description

### [Field of the Invention]

The present invention relates to a melting equipment.

Priority is claimed on Japanese Patent Application No. 2010-134194, filed on June 11, 2010.

### [Description of Related Art]

As is well known, there is a gasification melting system as a technique that can treat a wide range of wastes from municipal waste to non-flammable waste, burned residues, sludge, landfilled solid waste, and the like. The gasification melting system is provided with: a gasification furnace that thermally decomposes and thus gasifies waste; and a melting equipment that is arranged on the downstream side of the gasification furnace and combusts the thermally decomposed gas generated from the gasification furnace at a high temperature so as to melt ash in the gas into molten sludge.

The following Patent Document 1 discloses a gasification melting system equipment provided with: a melting furnace that combusts thermally decomposed gas and chars at a high temperature; an exhaust equipment that exhausts slag generated from the melting furnace; and a secondary combustion chamber that combusts the combustion exhaust gas generated from the melting furnace a second time. The gasification melting system equipment is provided with: an ejector that suctions the combustion exhaust gas through a combustion exhaust gas extraction pipe that is provided at the bottom portion of a slag tap of the melting furnace; and a fan that sends driving air to the ejector for suctioning the combustion exhaust gas into the ejector. With the above configuration, the high-temperature combustion exhaust gas is circulated so as to maintain the slag tap at a high temperature, thereby continuously suppressing solidification of slag and continuing favorable circulation without lowering the temperature of the combustion exhaust gas for circulation.

### [Prior Art Document]

### [Patent Document]

[Patent Document 1] Japanese Unexamined Patent Application, First Publication No. 2003- 161411A discloses the preamble of claim 1.

### SUMMARY OF THE INVENTION

### [Problems to be Solved by the Invention]

However, in the related art, there was a problem in that the circulation of the combustion exhaust gas becomes unstable because salts having a low melting temperature and/or slag droplets and the like that are accompanied by the combustion exhaust gas are incorporated into the combustion exhaust gas, move along with the combustion exhaust gas, and cause the incorporated substance to attach to the inner wall surface of the ejector.

The present invention has been made in consideration of the above circumstance, and an object thereof is to provide a melting equipment that can stably circulate combustion exhaust gas by suppressing clogging or narrowing a channel of the combustion exhaust gas.

### [Means for Solving the Problem]

In order to achieve the above object, the present invention employs the following measures.

That is, according to a first aspect of the present invention, a gasification melting furnace is provided with the features of claim 1.

According to the above configuration, since the adhesion-prevention unit is included, an incorporated substance of dust or salts in the combustion exhaust gas is prevented from attaching to the inner wall surface of the ejector. Thereby, the combustion exhaust gas channel is not clogged or narrowed; and therefore the combustion exhaust gas can be stably circulated.

In addition, the adhesion-prevention unit preferably has an adhered substance removal portion that removes an adhered substance that is attached to the inner wall surface of the ejector.

According to the above configuration, since the adhered substance removal portion that removes the adhered substance that is attached to the inner wall surface of the ejector is included, the adhered substance can be removed even when the incorporated substance included in the combustion exhaust gas is attached to the inner wall surface of the ejector.

In addition, the adhered substance removal portion preferably supplies vibration to the inner wall surface of the ejector.

According to the above configuration, since the adhered substance removal portion supplies vibration to the inner wall surface of the ejector, the adhered substance on the inner wall surface of the ejector can be removed without inhibiting the smooth flow of the combustion exhaust gas or driving air of the ejector.

In addition, the adhered substance removal portion preferably blows air to the inner wall surface of the ejector.

According to the above configuration, since the adhered substance removal portion blows air to the inner wall surface of the ejector, it is possible to remove the adhered substance being attached to the inner wall surface of the ejector using blown air, and join the removed adhered substance into the flow of the ejector. Thereby, the adhered substance can be blown toward the downstream side more reliably, and efforts for maintenance, such as cleaning, can be reduced.

In addition, the adhered substance removal portion preferably performs mechanical washing on the inner wall surface of the ejector.

According to the configuration, since the adhered substance removal portion performs mechanical washing on the inner wall surface of the ejector, the adhered substance on the inner wall surface of the ejector can be directly removed.

In addition, the adhesion-prevention unit preferably has a swirling separation portion that is provided upstream of the contraction portion, swirls the introduced combustion exhaust gas so as to form a swirling flow, and centrifugally separates any incorporated substance included in the swirling flow.

According to the above configuration, since the swirling separation portion that centrifugally separates the incorporated substance included in the swirling flow is included upstream of the contraction portion, an incorporated substance that reaches the contraction portion can be reduced. Thereby, the adhered substance that is attached to the inner wall surface of the ejector can be reduced.

In addition, the swirling separation portion preferably has a cooling system that cools the inner wall along which the swirling flow of the combustion exhaust gas flows.

According to the above configuration, since the cooling system that cools the inner wall along which the swirling flow of the combustion exhaust gas flows is included, it is possible to separate salts incorporated in the combustion exhaust gas and the combustion exhaust gas by solidifying the volatilized salts that are included in the combustion exhaust gas. Thereby, the adhered substance that is attached to the inner wall surface of the ejector can be further reduced.

In addition, a plurality of the ejectors is preferably provided in a row.

According to the above configuration, since the plurality of the ejectors is provided in a row, the combustion exhaust gas can be favorably introduced to the bypass channel even when the swirling separation portion having a great pressure loss is provided at upstream of the contraction portion.

In addition, the adhesion-prevention unit preferably has an air film forming portion that forms an air film along the inner wall surface of the ejector.

According to the above configuration, since the air film forming portion that forms an air film along the inner wall surface of the ejector is included, the incorporated substance included in the combustion exhaust gas does not easily reach the inner wall surface of the ejector. Thereby, the incorporated substance that is attached to the contraction portion can be reduced.

In addition, the adhesion-prevention unit preferably has a plurality of replaceable branching channels that is provided at the bypass channel, and branches on the upstream side and joins with the downstream side, and each of the plurality of the branching channels has an ejector.

According to the above configuration, since the bypass channel has a plurality of the replaceable branching channels that branches on the upstream side, and joins with the downstream side, and the ejector is provided at each of the branching channels, it is possible to circulate the combustion exhaust gas using one branching channel and to clean the ejector in the other branching channel. Therefore, it is possible to clean the ejector so as to remove the adhered substance on the inner side surface of the ejector while continuing the operation of the melting equipment.

In addition, the adhesion-prevention unit preferably has a liquid dispersion portion that is provided at upstream of the ejector, and disperses liquid in the combustion exhaust gas so as to remove the incorporated substance included in the combustion exhaust gas, and the driving air in the ejector preferably has a temperature that is equal to or higher than the temperature at which the dispersed liquid gasifies.

According to the above configuration, since the adhesion-prevention unit has the liquid dispersion portion, and the driving air in the ejector has a temperature that is equal to or higher than the temperature at which the dispersed liquid gasifies, even when liquid mist is included in the combustion exhaust gas through liquid dispersion, the liquid is gasified so as to suppress the liquid being attached to the inner wall surfaces of the ejectors and the wall surfaces of the bypass channel. Thereby, trapping of the residual incorporated substance in the combustion exhaust gas by the liquid attached to the inner wall surfaces of the ejectors and the wall surfaces of the bypass channel is suppressed; and therefore the combustion exhaust gas channel is prevented from being clogged or narrowed, whereby the combustion exhaust gas can be stably circulated.

### [Effects of the Invention]

According to the melting equipment of the present invention, it is possible to stably circulate combustion exhaust gas by suppressing clogging or narrowing of the channel of combustion exhaust gas.

### BRIEF DESCRIPTION OF THE DRAWINGS

FIG. 1 is a schematic view of a gasification melting system S according to an embodiment of the present invention.
FIG. 2 is an enlarged view of the main parts of melting equipment 1A according to a first embodiment of the present invention.
FIG. 3 is an enlarged cross-sectional view of an ejector 21 according to the first embodiment of the present invention.
FIG. 4 is an enlarged cross-sectional view of an ejector 21A according to a first modified example of the first embodiment of the present invention.
FIG. 5 is an enlarged cross-sectional view of an ejector 21B according to a second modified example of the first embodiment of the present invention.
FIG. 6 is an enlarged view of the main parts of melting equipment 1B according to a second embodiment of the present invention.
FIG. 7 is a schematic configuration view of melting equipment 1B1 according to a first modified example of the second embodiment of the present invention.
FIG. 8 is an enlarged cross-sectional view of the main parts of melting equipment 1B2 according to a second modified example of the second embodiment of the present invention.
FIG. 9 is an enlarged cross-sectional view of the main parts of melting equipment 1C according to a third embodiment of the present invention.
FIG. 10 is a schematic configuration view showing an adhesion-prevention unit 36A according to a modified example of the third embodiment of the present invention.
FIG. 11 is a schematic configuration view showing melting equipment 1D according to a fourth embodiment of the present invention.
FIG. 12 is a schematic configuration view showing melting equipment 1E according to a fifth embodiment of the present invention.

### EMBODIMENTS OF THE INVENTION

Hereinafter, embodiments of the present invention will be described with reference to the accompanying drawings.

Firstly, a gasification melting system according to first to fourth embodiments of the present invention will be schematically described.

### (Gasification melting system)

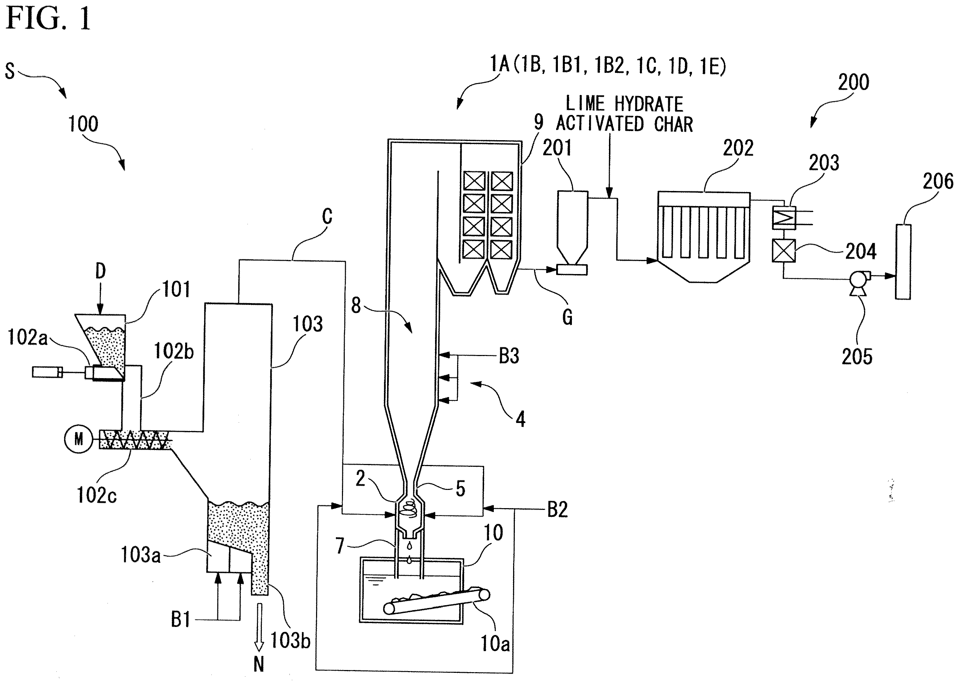

FIG. 1 is a schematic view of a gasification melting system S.

The gasification melting system S is provided with: a fluidized-bed type gasification furnace 100 that thermally decomposes and gasifies waste; a melting equipment 1A that is provided on the downstream side of the fluidized-bed type gasification furnace 100, and combusts thermally decomposed gas C generated in the fluidized-bed type gasification furnace 100 at a high temperature so as to make ash in the gas into molten slag; and an exhaust gas treatment equipment 200 that treats combustion exhaust gas G exhausted from the melting equipment 1A.

The fluidized-bed type gasification furnace 100 includes: a waste injection hopper 101 through which waste D is injected; a pusher-type first refuse feeding apparatus 102a that has an inlet connected to the outlet of the waste injection hopper 101, and pushes out the waste D in the horizontal direction; a connection chute 102b that is connected to the outlet of the first refuse feeding apparatus 102a at the top portion, and forms a vertically extending space; a screw-type second refuse feeding apparatus 102c having an inlet connected to the bottom portion of the connection chute 102b; and a furnace main body 103 to which a fixed amount of the waste D is supplied from the second refuse feeding apparatus 102c.

Combustion air B1 having, for example, a temperature of approximately 120°C to 230°C and an air ratio of approximately 0.2 to 0.7 is blown into the furnace main body 103 through a wind box 103a from the furnace bottom portion, and the fluidized layer temperature is maintained at approximately 450°C to 600°C. The furnace main body 103 turns the waste D into thermally decomposed gas so as to decompose the waste D into gas, gaseous tar and char (carbides). An incombustible substance N is sequentially exhausted from an incombustible substance exhaust opening 103b.

Char is gradually pulverized in the fluidized layer of the furnace main body 103, and is introduced to a swirling melting furnace 2 of the melting equipment 1A in conjunction with the gas and gaseous tar. Hereinafter, the components that are introduced to the swirling melting furnace 2 will be collectively referred to as thermally decomposed gas C.

### (Melting equipment)

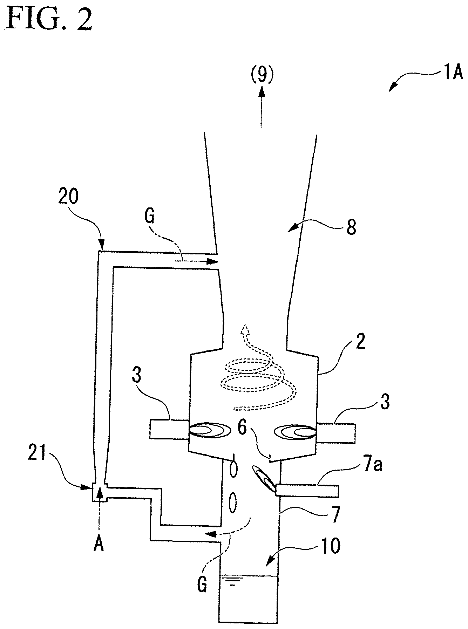

FIG. 2 is an enlarged view of the main parts of melting equipment 1A.

As shown in FIG. 2, the melting equipment 1A is provided with: the vertical swirling melting furnace (melting furnace) 2; a secondary combustion chamber 8 disposed above the swirling melting furnace 2; a slag extraction chute 7 that has a slag cut burner 7a and guides slag generated in the swirling melting furnace 2 downward; a boiler 9 disposed on the downstream side of the secondary combustion chamber 8; a granulation tank 10 provided below the swirling melting furnace 2; and a bypass channel 20 connecting the slag extraction chute 7 and the secondary combustion chamber 8.

As shown in FIGS. 1 and 2, the swirling melting furnace 2 includes a thermal decomposition gas burner 3 that mixes the thermally decomposed gas C exhausted from the fluidized-bed type gasification furnace 100 with combustion air B2 and blows the gas mixture into the furnace.

In the swirling melting furnace 2, as shown in FIG. 2, the gas mixture of the thermally decomposed gas C and the combustion air B2 is combusted while forming a swirling flow so that the temperature inside the furnace is maintained at 1300°C to 1500°C, and ash in the thermally decomposed gas C is melted and made into slag. The molten slag is attached to the inner wall surface of the swirling melting furnace 2, flows downward, and is exhausted into the granulation tank 10 through the slag extraction chute 7 from a slag cinder notch 6 at the furnace bottom portion.

The bypass channel 20, as shown in FIG. 2, has an ejector 21 that is provided on the way of the bypass channel 20 and suctions the combustion exhaust gas G, and is configured to guide the combustion exhaust gas G to the secondary combustion chamber 8 from the slag extraction chute 7 through the bypass channel 20. That is, the high-temperature combustion exhaust gas G continuously passes through the slag cinder notch 6 so that solidification of the molten slag is suppressed. The details of the bypass channel 20 will be described below in detail.

As shown in FIG. 1, the slag exhausted to the granulation tank 10 is rapidly cooled in the granulation tank 10, transported out through a slag conveyer 10a, and collected as granulated slag. The collected granulated slag can be effectively used as roadbed material and the like.

On the other hand, the combustion exhaust gas G exhausted from the swirling melting furnace 2 is introduced to the secondary combustion chamber 8 through a connection portion 5. The secondary combustion chamber 8 combusts uncombusted components in the combustion exhaust gas G using supplied combustion air B3. After that, the combustion exhaust gas G is thermally collected in the boiler 9, cooled to approximately 200°C to 250°C, and sent to the exhaust gas treatment equipment 200.

Returning to FIG. 1, in the exhaust gas treatment equipment 200, the combustion exhaust gas G exhausted from the boiler 9 is introduced to a temperature reduction tower 201, cooled to approximately 150°C to 180°C by spraying water directly, then, sprayed lime hydrate and activated char in a smoke path according to necessity, and introduced to a reaction dust collection apparatus 202.

In addition, in the reaction dust collection apparatus 202, smoke dust, acidic gas, DXNs and the like in the combustion exhaust gas G are removed, and then dust ash exhausted from the reaction dust collection apparatus 202 is treated by a chemical treatment and is landfilled. The combustion exhaust gas G from which smoke dust, acidic gas, DXNs and the like are removed is reheated in a steam heater 203, and NOₓ is removed in a catalyst reaction apparatus 204, and then, the combustion exhaust gas is emitted in the air through a chimney pipe 206 through an induction fan 205.

### (Ejector)

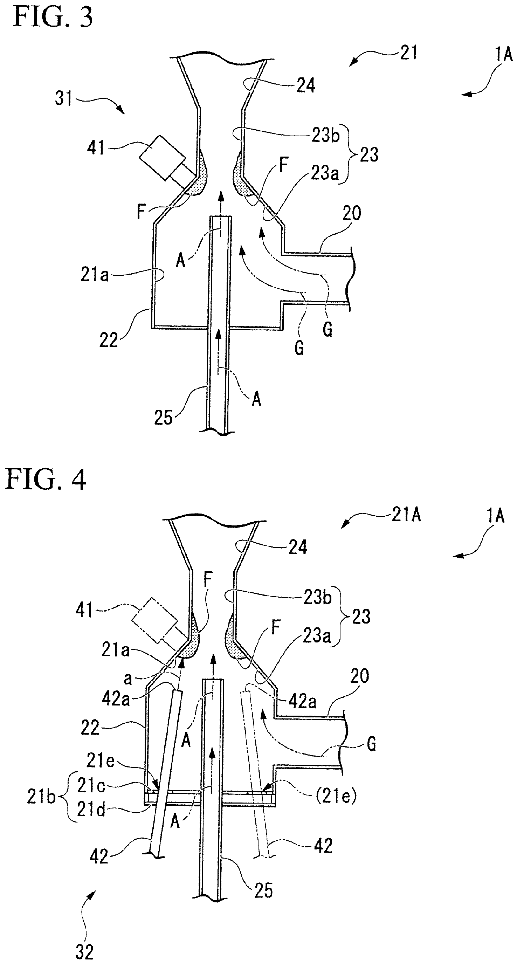

FIG. 3 is an enlarged cross-sectional view of the ejector 21.

As shown in FIG. 3, the ejector 21 is provided with: a cylinder portion 22 which has a cylindrical shape and a closed bottom, and is connected to the bypass channel 20 through which the combustion exhaust gas G flows; a contraction portion 23 in which the channel cross section thereof become narrowed while extending toward the downstream side of the cylinder portion 22; a radially expanding portion 24 that is continuously provided to the downstream side of the contraction portion 23; and a driving air supply pipe 25 that is coaxially provided with the cylinder portion 22 and ejects high-pressure air A toward the downstream side from the front end opening portion surrounded by the contraction portion 23.

The contraction portion 23 includes: a tapering portion 23a having a diameter gradually contracting from the upstream of the channel toward the downstream; and a small diameter portion 23b that continues to the downstream side of the tapering portion 23a and has a substantially constant diameter.

In the ejector 21, when the high-pressure air A is injected from the driving air supply pipe 25, the flow velocity of the high-pressure air A is increased through the contraction portion 23. The high-pressure air A having an increased flow velocity entrains and flows the ambient combustion exhaust gas G toward the downstream, and thus turns the upstream side of the ejector 21 into a negative pressure. Thereby, the combustion exhaust gas G is suctioned from the slag extraction chute 7 (refer to FIG. 2).

Meanwhile, the position of the ejector 21 may be appropriately changed, and the flow direction of the high-pressure air A or the introduction direction of the combustion exhaust gas G can also be appropriately set.

### (Adhesion-prevention unit) (Adhered substance removal portion)

As shown in FIG. 3, the ejector 21 having the above configuration is provided with an adhesion-prevention unit 31 that prevents adhesion of an incorporated substance that incorporates into the combustion exhaust gas G. The adhesion-prevention unit 31 has an air knocker (adhered substance removal portion) 41 that removes an adhered substance F that is attached to the inner wall surface 21a of the ejector 21.

As shown in FIG. 3, the air knocker 41 is disposed so as to strike the outer wall surface of the tapering portion 23a on the small diameter portion 23b side and thus supply vibration to the inner wall surface 21a of the ejector 21. The air knocker 41 does not operate at all times, but operates on a regular basis.

Next, the operations of the adhesion-prevention unit 31 and the air knocker 41 having the above configurations will be described.

When the ejector 21 is driven in a state in which the air knocker 41 is not in operation, the combustion exhaust gas G flows through the bypass channel 20 from the slag extraction chute 7 toward the secondary combustion chamber 8 as shown in FIG. 2 due to the above action. In the ejector 21, the combustion exhaust gas G repeatedly collides with the inner wall surface 21a of the contraction portion 23 such that a mixture that is entrained with the combustion exhaust gas G is attached to and accumulated on the inner wall surface 21a, and thus the adhered substance F grows.

The adhered substance F that is attached to and accumulated on the inner wall surface 21a is composed of dust or salts that are included in the combustion exhaust gas G, and the major components are CaCl₂, CaSO₄, NaCl, Na₂SO₄, KCl, K₂SO₄, SiO₂, and Al₂O₃.

When a predetermined time elapses, the air knocker 41 comes into operation. The air knocker 41 strikes the outer wall surface of the ejector 21, and supplies vibration to the inner wall surface 21a of the ejector 21. The adhered substance F that is attached to the inner wall surface 21a is fallen off by the vibration. The adhered substance F that is fallen off from the inner wall surface 21a is entrained and flew by the high-pressure air A and the combustion exhaust gas G toward the downstream side, made to flow through the bypass channel 20, finally reaches the secondary combustion chamber 8, and is combusted. Alternatively, the adhered substance accumulates on the bottom portion of the ejector 21. The accumulated substance in the ejector 21 is exhausted outside the ejector 21 from a cleaning opening, not shown, by regular cleanings.

In addition, the air knocker 41 operates for a certain time, and then, again, comes into stop.

In the ejector 21 in which the adhered substance F is removed as described above, the combustion exhaust gas G channel is neither clogged nor narrowed, and the combustion exhaust gas G stably circulates.

As described above, since the melting equipment 1A includes the adhesion-prevention unit 31, adhesion of the incorporated substance that incorporates into the combustion exhaust gas G (dust, salts, or the like) to the inner wall surface 21 of the ejector 21 is prevented. Thereby, the combustion exhaust gas G channel is prevented from being clogged or narrowed, and therefore the combustion exhaust gas G is capable of being stably circulated.

In addition, since the air knocker 41 is included, the adhered substance F is removed even when the incorporated substance in the combustion exhaust gas G is attached to the inner wall surface 21a of the ejector 21. Thereby, the channel of the combustion exhaust gas G being clogged or narrowed is suppressed so that the combustion exhaust gas G is capable of being stably circulated.

In addition, since the air knocker 41 supplies vibration to the inner wall surface 21a of the ejector 21, the adhered substance F on the inner wall surface 21a of the ejector 21 is capable of being removed without inhibiting the smooth flow of the combustion exhaust gas G or the high-pressure air A in the ejector 21. Furthermore, the configuration of the apparatus becomes simple.

In the above configuration, the number of the air knocker 41 used is single, but may be plural. In a case in which a plurality of the air knockers 41 is used, when the air knockers are provided at substantially equal intervals in the circumferential direction of the gas channel cross section, vibration is capable of being evenly supplied to the inner wall surface 21a, and the adhered substance F locally remaining on the inner wall surface 21a of the ejector 21 can be suppressed.

In addition, in the above configuration, the air knocker 41 is used, but the ejector may be driven by oil pressure, or vibration may be supplied by a motor as long as vibration can be supplied to the inner wall surface 21a of the ejector 21.

In addition, in the above configuration, the air knocker 41 is operated on a regular basis, but may be operated at all times.

In addition, the frequencies of vibration supplied to the inner wall surface 21a may be changed by changing timings at which the air knocker 41 strikes the outer wall surface.

### (First modified example of the first embodiment)

FIG. 4 is an enlarged cross-sectional view of an ejector 21A according to a first modified example of the first embodiment.

As shown in FIG. 4, an adhesion-prevention unit 32 is provided with the ejector 21A. The adhesion-prevention unit 32 has an air bluster (adhered substance removal portion) 42 that removes the adhered substance F that is attached to the inner wall surface 21a of the ejector 21A.

The air bluster 42 is formed into a long shape, and compressed air a is injected from a front end portion 42a. The air bluster 42 extends substantially along the driving air supply pipe 25 from an end wall 21b of the ejector 21A (cylinder portion 22) to the vicinity of the contraction portion 23 (tapering portion 23a).

The end wall 21b of the ejector 21A has a dual structure. The end wall 21b is configured to overlap an inner end wall 21c having a circular hole 21e formed therein and an outer end wall 21d that is provided so as to be rotatable with respect to the inner end wall 21c, and seals the ejector 21A air-tightly.

The air bluster 42 is movably inserted to the circular hole 21e of the inner end wall 21c so as to be rotatable in the circumferential direction of the channel cross section. In addition, the air bluster 42 penetrates the outer end wall 21d in a state in which the air tightness with the outer end wall 21d is secured, is refrained so as to be relatively rotating with respect to the outer end wall 21d, and is capable of being relatively moved in the tube axial direction of the cylinder portion 22.

The above configuration enables the front end portion 42a of the air bluster 42 to face the contraction portion 23 of the ejector 21A throughout the entire circumstance and to stay ready at the bottom while not in operation.

According to the air bluster 42, since the compressed air a is blown to the inner wall surface 21a of the ejector 21A, the removed adhered substance F is capable of being rapidly joined into the flow of the high-pressure air A that is injected by the ejector 21A. Thereby, the adhered substance F is capable of being blown more reliably into the secondary combustion chamber 8 on the downstream side. Furthermore, the adhered substance F that falls and remains on the end wall 21b is capable of being decreased, and it is possible to reduce efforts for maintenance, such as cleaning.

In addition, since the air bluster is capable of being rotated substantially the entire circumference in the circumferential direction in the channel cross section of the contraction portion 23 of the ejector 21A, the adhered substance F that is attached to the inner wall surface 21a of the contraction portion 23 is capable of being removed throughout the entire circumference in the circumferential direction in the channel cross section without remainder. In addition, since only one air bluster 42 is provided, the space factor of the ejector 21A can be improved.

In addition, in the above configuration, the air bluster 42 is provided together or in an overlapping manner with the air knocker 41.

### (Second modified example of the first embodiment)

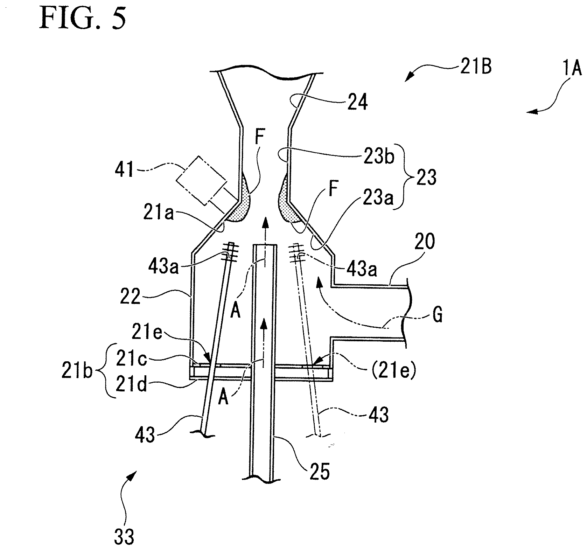

FIG. 5 is an enlarged cross-sectional view of an ejector 21B according to a second modified example of the first embodiment.

As shown in FIG. 5, the ejector 21B is provided with an adhesion-prevention unit 33. The adhesion-prevention unit 33 includes a washing brush (adhered substance removal portion) 43 that removes the adhered substance F that is attached to the inner wall surface 21a of the ejector 21B.

The washing brush 43 is formed into a long shape, and has a number of washing bristles at a front end portion 43a. The washing brush 43 extends substantially along the driving air supply pipe 25 from the end wall 21b of the ejector 21 to the vicinity of the contraction portion 23.

Similarly to the air bluster 42, the washing brush 43 is configured so as to be rotatable in the circumferential direction of the channel cross section and movable in the tube axial direction of the cylinder portion 22. The washing brush 43 stays ready at the bottom while not in operation, and moves the front end portion 43a toward the contraction portion 23 side so as to bring the washing bristles into contact with the adhered substance F while in operation. In addition, the washing brush 43 rotates in the circumferential direction of the channel cross section while advancing and retreating in the tube axial direction of the cylinder portion 22 so as to mechanically wash the adhered substance F.

According to the above configuration, since the washing brush 43 mechanically washes the inner wall surface 21a of the ejector 21, the adhered substance F on the inner wall surface 21a of the ejector 21 can be directly removed, and even strongly fixed adhered substance F can be removed more reliably.

In the above configuration, the air bluster 42 and the washing brush 43 are rotated, but may remain still.

In the above configuration, the numbers of the air bluster 42 and the washing brush 43 that are provided are single, but may be plural.

In addition, in the above configuration, the washing brush 43 is provided, but may be provided together or in an overlapping manner with the air knocker 41.

In addition, in the above configuration, the air bluster 42 and the washing brush 43 are configured to be automatically operated, but may be operated manually so as to remove the adhered substance F.

### (Second embodiment)

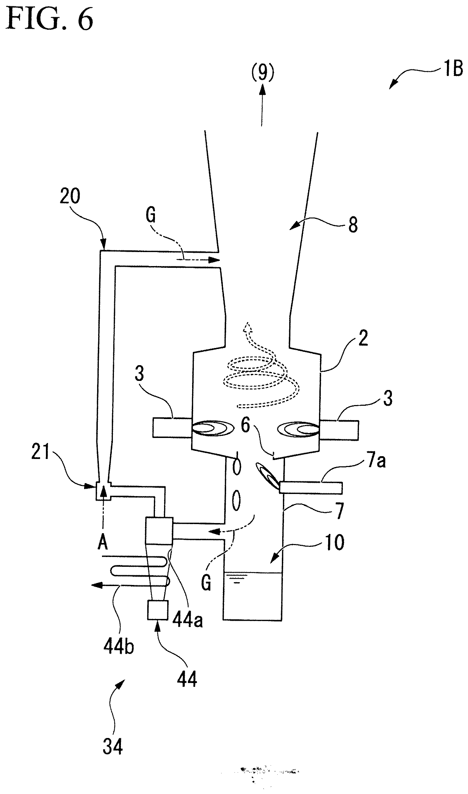

FIG. 6 is an enlarged view of the main parts of melting equipment 1B according to a second embodiment of the invention.

In FIG. 6, the same configuration components as in FIGS. 1 to 5 will be given to the same reference signs, and a description thereof will not be made.

As shown in FIG. 6, the melting equipment 1B includes an adhesion-prevention unit 34. The adhesion-prevention unit 34 includes a cyclone separator (swirling separation portion) 44 provided upstream of the ejector 21 in the bypass channel 20.

The cyclone separator 44 swirls the introduced combustion exhaust gas G so as to form a swirling flow, and centrifugally separates an incorporated substance included in the swirling flow. The cyclone separator 44 includes a cooling system 44b that cools an inner wall 44a along which the swirling flow of the combustion exhaust gas G flows. The cooling system 44b cools the temperature of the inner wall 44a to the solidification point or lower of volatile salts (volatilized salts) included in the combustion exhaust gas G.

Next, the operations of the adhesion-prevention unit 34 and the cyclone separator 44 having the above configuration will be described.

When the combustion exhaust gas G is suctioned into the bypass channel 20 due to a negative pressure, the combustion exhaust gas G is guided to the cyclone separator 44. The cyclone separator 44 forms a swirling flow by flowing the combustion exhaust gas G along the inner wall 44a. In addition, the incorporated substance included in the combustion exhaust gas G is centrifugally separated, and guided downward while the incorporated substance collides with the inner wall 44a and moves in a swirling form.

At this time, since the inner wall 44a is cooled to a temperature that is equal to or lower than the solidification point of the salts included in the combustion exhaust gas G, the volatile salts in the combustion exhaust gas G are solidified, and guided downward in the same manner as above.

The combustion exhaust gas G from which the incorporated substance and the volatile salts are removed is exhausted from the cyclone separator 44 and guided to the ejector 21. The combustion exhaust gas G introduced to the ejector 21 is entrained by the high-pressure air A injected from the driving air supply pipe 25 and is flowed toward the downstream side along the inner wall surface 21a of the contraction portion 23; however, the incorporated substance and the volatile salts have been removed, the adhered substance F is not easily attached to the inner wall surface 21a of the contraction portion 23.

As described above, since the cyclone separator 44 that centrifugally separates the incorporated substance included in the swirling flow is included upstream of the contraction portion 23 of the ejector 21, it is possible to reduce the incorporated substance being reached the contraction portion 23. Thereby, the adhered substance F that is attached to the contraction portion 23 of the ejector 21 (refer to FIG. 3) can be reduced.

In addition, since the inner wall 44a of the cyclone separator 44 is cooled, the volatile salts included in the combustion exhaust gas G is capable of being solidified and separated. Thereby, the adhered substance F that is attached to the inner wall surface 21a of the contraction portion 23 of the ejector 21 can be further reduced.

Even in the above configuration, when the melting equipment 1B is operated for a long time, there is a possibility of the adhered substance F being generated on the inner wall surface 21a of the contraction portion 23 of the ejector 21. When the adhesion-prevention unit 34 is configured by adding at least one of the air knocker 41, the air bluster 42, and the washing brush 43 in the first embodiment together with the cyclone separator 44 in order to remove the adhered substance F, the combustion exhaust gas G channel is capable of being more reliably prevented from being clogged or narrowed, and the combustion exhaust gas G can be more stably circulated.

### (First modified example of the second embodiment)

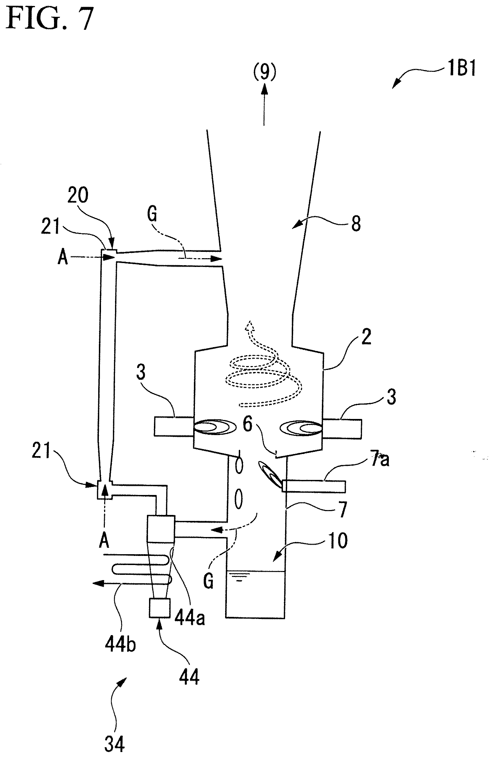

FIG. 7 is a schematic configuration view of melting equipment 1B1 according to a first modified example of the second embodiment.

In the above described melting equipment 1B, a single ejector 21 provided at the downstream of the cyclone separator 44, but the melting equipment 1B1 is provided with a plurality of the ejectors 21 in a row as shown in FIG. 7.

According to the above configuration, since two ejectors 21 are provided in a row, in a case in which the cyclone separator 44 having a large pressure loss is provided, a greater negative pressure is capable of being exerted on the downstream side of the cyclone separator 44, and the combustion exhaust engine G is capable of being favorably guided to the bypass channel 20 even when the gas flow velocity that is set in the ejector 21 cannot be increased.

It is needless to say that three or more ejectors 21 may be provided in a row.

### (Second modified example of the second embodiment)

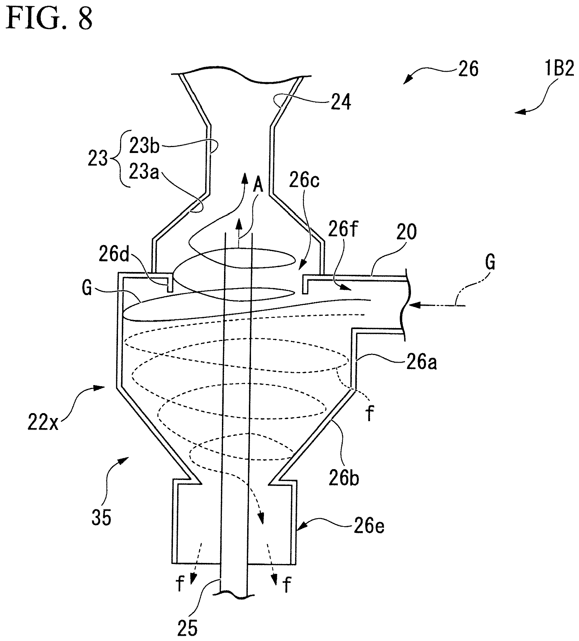

FIG. 8 is an enlarged cross-sectional view of the main parts of melting equipment 1B2 according to a second modified example of the second embodiment.

As shown in FIG. 8, the melting equipment 1B2 includes an adhesion-prevention unit 35. The adhesion-prevention unit 35 has a swirling separation cylinder (swirling separation portion) 22x that consists a part of an ejector 26.

The ejector 26 is provided instead of the ejector 21. The ejector 26 not only includes the contraction portion 23 and the radially expanding portion 24, but also has the swirling separation cylinder (swirling separation portion) 22x disposed in a portion corresponding to the cylinder portion 22 in the ejector 21.

The swirling separation cylinder 22x has the cylinder axis in the substantially vertical direction. The swirling separation cylinder 22x is schematically consisted of a fixed diameter portion 26a that is formed in a substantially fixed diameter and has an introduction opening 26f through which the combustion exhaust gas G is introduced from the tangential direction, formed therein, a taper portion 26b that continues to the bottom of the fixed diameter portion 26a and has a diameter gradually contracting downward. The swirling separation cylinder 22x further includes an inner circumferential partition 26d dropping from the entire circumference of the edge portion of a gas outlet 26c that opens at the top portion of the fixed diameter portion 26a, and an incorporated substance exhausting portion 26e formed at the lower end of the taper portion 26b.

In addition, the ejector is configured that the contraction portion 23 disposed on the top of the gas outlet 26c and the driving air supply pipe 25 penetrates through the gas outlet 26c and the incorporated substance exhausting portion 26e.

That is, when the combustion exhaust gas G is introduced from the introduction opening 26f, the combustion exhaust gas G flows along the inner circumferential wall of the fixed diameter portion 26a so that the swirling flow of the combustion exhaust gas G is formed, and the incorporated substance included in the combustion exhaust gas G is centrifugally separated. The centrifugally separated incorporated substance collides with the inner wall 44a of the taper portion 26b so as to be guided downward while moving in a swirling shape, and is exhausted from the incorporated substance exhausting portion 26e (indicated by reference sign f in FIG. 8). On the other hand, the combustion exhaust gas G from which the incorporated substance is separated is exhausted from the gas outlet 26c on the top. At this time, since the inner circumferential partition 26d prevents interruption between the combustion exhaust gas G exhausted from the gas outlet 26 and the combustion exhaust gas G introduced from the introduction opening 26f, it is possible to suppress that the incorporated substance included in the combustion exhaust gas G that is newly introduced from the introduction opening 26f is exhausted from the gas outlet 26c.

In the above manner, the combustion exhaust gas G exhausted from the gas outlet 26c is wound by the high-pressure air that is injected from the driving air supply pipe 25 and is flowed to the downstream side.

Even in this case, since the incorporated substance of the combustion exhaust gas G is removed, the adhered substance F is not easily generated on the inner wall surface 21a of the contraction portion 23 in the ejector 26, and the same effect as the above effect can be obtained.

The adhesion-prevention unit 35 may be configured by providing the cyclone separator 44, the air knocker 41, the air buster 42, and the washing brush 43 in addition the ejector 26. The air blaster 42 and the washing brush 43 may be provided at locations at which the fixed diameter portion 26a and the like are not interrupted.

In addition, similarly to the above described cyclone separator 44, the adhesion-prevention unit may be configured to cool the fixed diameter portion 26a and the inner circumferential wall of the taper portion 26b.

### (Third embodiment)

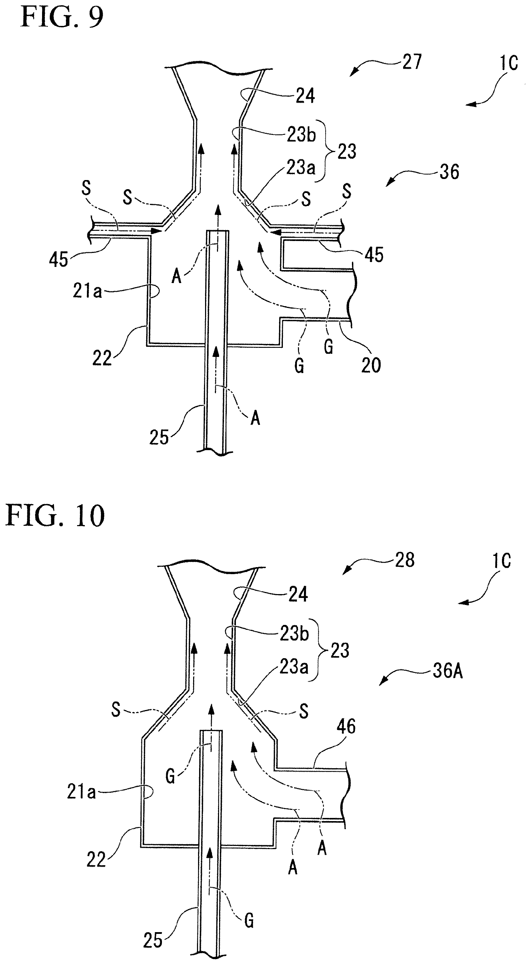

FIG. 9 is an enlarged cross-sectional view of the principal parts of melting equipment 1C according to a third embodiment of the invention. Meanwhile, in FIG. 9, the same configuration components as in FIGS. 1 to 8 will be given the same reference signs, and description thereof will not be made.

As shown in FIG. 9, the melting equipment 1C has almost the same configuration as the melting equipment 1A, but there is a difference in that an ejector 27 is provided instead of the ejector 21. The ejector 27 is provided with an adhesion-prevention unit 36. The adhesion-prevention unit 36 has a plurality of air supply pipes (air film forming portion) 45.

The air supply pipe 45 opens the beginning end of the contraction portion 23 on the upstream side, ejects air s, and forms an air film along the inner wall surface 21a of the ejector 27. That is, when the air s is supplied from the air supply pipe 45, the air s is absorbed into the flows of the combustion exhaust gas G and the high-pressure air A, and an air film that flows toward the downstream side along the inner wall surface 21a is formed.

Thereby, the incorporated substance included in the combustion exhaust gas G does not easily reach the inner wall surface 21a of the ejector 27. Thereby, the adhered substance that is attached to the contraction portion 23 is capable of being reduced.

### (Modification example of the third embodiment)

FIG. 10 is a schematic configuration view showing an adhesion-prevention unit 36A according to a modified example of the third embodiment of the invention.

As shown in FIG. 10, the adhesion-prevention unit 36A includes a driving air supply pipe (air film forming portion) 46 that forms an air film along the inner wall surface 21a of the ejector 28.

The driving air supply pipe 46 supplies the high-pressure air A as the driving air of the ejector 28. That is, in the ejector 28, the driving air supply pipe 46 that introduces the high-pressure air A as the driving air to the cylinder portion 22 is opened, the bypass channel 20 that introduces the combustion exhaust gas G is penetrated through the cylinder portion 22, and includes the front end opening portion surrounded by the contraction portion 23. The ejector has a reverse position relationship with respect to the driving air supply pipe 25 and the bypass channel 20 of the above described ejector 21.

According to the adhesion-prevention unit 36A, the high-pressure air A flows along the inner wall surface 21a of the ejector 28 and forms an air film, and the combustion exhaust gas G flows toward the downstream side from the bypass channel 20 in a state of being surrounded by the air film. Thereby, the incorporated substance included in the combustion exhaust gas G does not easily reach the inner wall surface 21a of the ejector 28. As a result, it is possible to reduce the incorporated substance being attached to the contraction portion 23 of the ejector 28.

### (Fourth embodiment)

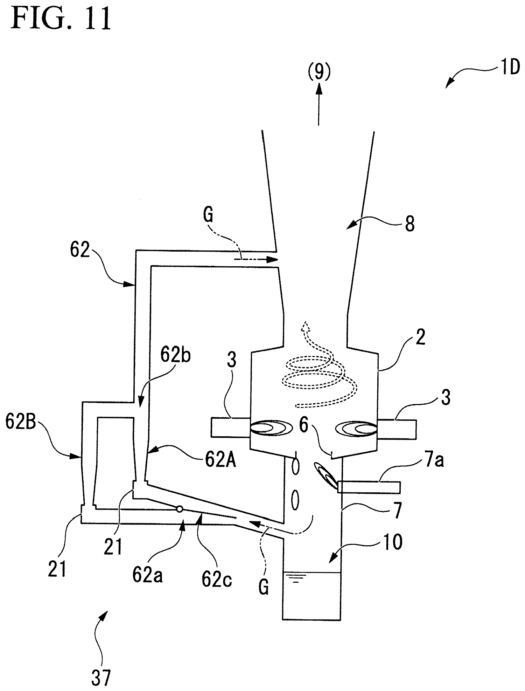

FIG. 11 is a schematic configuration view showing melting equipment 1D according to a fourth embodiment of the invention. In FIG. 11, the same configuration components as in FIGS. 1 to 10 will be given the same reference signs, and description thereof will not be made.

As shown in FIG. 11, the melting equipment 1D includes an adhesion-prevention unit 37. The adhesion-prevention unit 37 has two branching channels 62A and 62B that are provided in series in a bypass channel 62.

The two branching channels 62A and 62B branch at a branching portion 62a on the upstream side, join at a combining portion 62b on the downstream side. The branching channels 62A and 62B includes the ejectors 21 respectively.

The branching portion 62a is provided with a changeover valve 62c so that the combustion exhaust gas G is capable of being selectively blown into only one of the branching channels 62A and 62B.

According to the above configuration, since the bypass channel 62 has the branching channels 62A and 62B, and the ejector 21 is provided at each of the branching channels 62A and 62B, it is possible to circulate the combustion exhaust gas G using one of the branching channels 62A and 62B (for example, the branching channel 62A) and to clean the ejector in the other (for example, the branching channel 62B). Therefore, the adhered substance F on the inner wall surface 21a of the ejector 21 can be removed by cleaning the ejector 21 while continuing the operation of the melting equipment 1D.

It is needless to say that three or more branching channels may be provided.

### (Fifth embodiment)

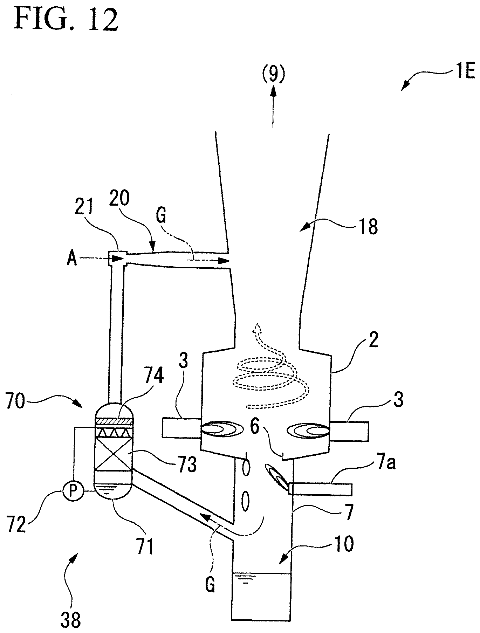

FIG. 12 is a schematic configuration view showing melting equipment 1E according to a fifth embodiment of the invention. In FIG. 12, the same configuration components as in FIGS. 1 to 11 will be given the same reference signs, and description thereof will not be made.

As shown in FIG. 12, the melting equipment 1E includes an adhesion-prevention unit 38. The adhesion-prevention unit 38 includes a fume cleaning tower (liquid dispersion portion) 70 that removes the incorporated substance included in the combustion exhaust gas G by sprinkling water to the combustion exhaust gas G, at the upstream of the ejector 21.

The fume cleaning tower 70 includes a casing 71; a pump 72 that sprinkles water that is stored at the bottom portion of the casing 71 from the top portion of the casing 71; a filler layer 73 that is formed in, for example, a ring shape so as to receive sprinkled water, and holds water on the surface so as to promote gas-liquid contact, and a demister 74 that is provided at an outlet of the casing 71.

The ejector 21 is configured to be driven using the high-pressure air A having a temperature that is equal to or higher than the melting point.

According to the above configuration, since the fume cleaning tower 70 is included upstream of the ejector 21, the incorporated substance that reaches the contraction portion 23 of the ejector 21 is capable of being reduced. Thereby, it is possible to reduce the adhered substance F being attached to the contraction portion 23 of the ejector 21.

In addition, since the demister 74 arranged at the outlet of the casing 71 is provided, it is possible to prevent misty water from flowing into the ejector 21 and the bypass channel 20 on the downstream side. Furthermore, since the high-pressure air A in the ejector 21 is at the melting point or higher, even when misty water is included in the combustion exhaust gas G due to water sprinkling, it is possible to prevent a water from attaching on the inner wall surface 21a in the ejector 21 and the wall surface of the bypass channel 20 by vaporizing the moisture. Thereby, since the residual incorporated substance in the combustion exhaust gas G is prevented from being trapped by water attached on the inner wall surface 21a of the ejector 21 and the wall surface of the bypass channel 20, and therefore the combustion exhaust gas G is capable of being stably circulated by preventing the clogging or narrowing of the combustion exhaust gas G channel.

The operation sequences, the shapes, combination, and the like of the respective component members as shown in the embodiments described above are an example, and various modifications are permitted based on design requirements within the scope of the invention.

### Industrial Applicability

According to the melting equipment according to the invention, it is possible to stably circulate combustion exhaust gas by suppressing clogging or narrowing of the channel of combustion exhaust gas.

### [Description of the Referenced Symbols]

1A, 1B, 1B1, 1B2, 1D, 1E MELTING EQUIPMENT
2 SWIRLING MELTING FURNACE (MELTING FURNACE)
7 SLAG EXTRACTION CHUTE
8 SECONDARY COMBUSTION CHAMBER
20 BYPASS CHANNEL
21 (21A, 21B), 26 TO 28 EJECTOR
21a INNER WALL SURFACE
22x SWIRLING SEPARATION CYLINDER (SWIRLING SEPARATION PORTION)
23 CONTRACTION PORTION
25 DRIVING AIR SUPPLY PIPE
31 TO 36, 36A, 37, 38 ADHESION-PREVENTION UNIT
41 AIR KNOCKER (ADHERED SUBSTANCE REMOVAL PORTION)
42 AIR BLUSTER (ADHERED SUBSTANCE REMOVAL PORTION)
43 WASHING BRUSH (ADHERED SUBSTANCE REMOVAL PORTION)
44 CYCLONE SEPARATOR (SWIRLING SEPARATION PORTION)
44a INNER WALL
44b COOLING SYSTEM
45 AIR SUPPLY PIPE (AIR FILM FORMING PIPE)
46 DRIVING AIR SUPPLY PIPE (AIR FILM FORMING PIPE)
62 BYPASS CHANNEL
62A, 62B BRANCHING CHANNEL
70 FUME CLEANING TOWER (LIQUID DISPERSION PORTION)
A HIGH-PRESSURE AIR
F ADHERED SUBSTANCE
G COMBUSTION EXHAUST GAS
S AIR (AIR FILM)

## Claims

1. A melting equipment comprising:
a melting furnace (2) that combusts and melts an ash;
a secondary combustion chamber (8) disposed above the melting furnace;
a slag extraction chute (7) that guides a slag generated in the melting furnace downward;
a bypass channel (20) that connects the slag extraction chute (7) and the secondary combustion chamber (8);
an ejector (21; 21A; 21B; 26; 27; 28) that is provided on the bypass channel, has a front end opening portion surrounded by a contraction portion (23) at which a channel cross section thereof is narrowed, and suctions a combustion exhaust gas into the bypass channel;
a driving air supply pipe (25) that ejects high-pressure air (A) toward the downstream side from the front end opening portion surrounded by the contraction portion (23),
the ejector being **characterized in that**
it comprises
an adhesion-prevention unit (31; 32; 33; 34; 35; 36; 36A; 37; 38) configured to prevent an incorporated substance that is incorporated in the combustion exhaust gas from attaching to an inner wall surface of the ejector,
wherein the adhesion-prevention unit (31; 32; 33; 34; 35; 36; 36A; 37; 38) comprises:
an air knocker (41) which is provided on an outer wall of the ejector (21) and supplies vibration to the inner wall surface (21a) of the ejector (21) by striking the outer wall surface of the ejector (21) so that the incorporated substance attached to the inner wall surface (21a) of the ejector (21) is capable of being removed; and
an air blaster (42) which injects air to the inner wall surface (21a) of the ejector (21), and
wherein the air blaster (42) is provided with a front end portion (42a) configured to inject a compressed air from a lower side than a front end opening portion provided in the driving air supply pipe (25).

2. The melting equipment according to Claim 1, wherein
the adhesion-prevention unit (31; 32; 33) has an adhered substance removal portion (41; 42; 43) that removes an adhered substance that is attached to the inner wall surface of the ejector.

3. The melting equipment according to Claim 2, wherein the adhered substance removal portion (43) performs mechanical washing on the inner wall surface of the ejector (21B).

4. The melting equipment according to any one of Claims 1 to 3, wherein the adhesion-prevention unit (34; 35) has a swirling separation portion (44; 22X) that is provided at an upstream of the contraction portion (23), swirls the introduced combustion exhaust gas so as to form a swirling flow, and centrifugally separates an incorporated substance included in the swirling flow.

5. The melting equipment according to Claim 4, wherein the swirling separation portion (44) has a cooling system (44b) that cools the inner wall (44a) along which the swirling flow of the combustion exhaust gas flows.

6. The melting equipment according to Claim 4 or 5, wherein a plurality of the ejectors (21) is provided in a row.

7. The melting equipment according to any one of Claims 1 to 6, wherein the adhesion-prevention (36; 36A) unit has an air film forming portion (45; 46) that forms an air film along the inner wall surface of the ejector (27; 28).

8. The melting equipment according to any one of Claims 1 to 7, wherein:
the adhesion-prevention unit (37) includes a plurality of replaceable branching channels (62A, 62B) that is provided at the bypass channel, and branches on the upstream side and joins with the downstream side; and
each of the plurality of the branching channels has an ejector (21).

9. The melting equipment according to any one of Claims 1 to 8, wherein:
the adhesion-prevention unit (38) includes a liquid dispersion portion (70) that is provided upstream of the ejector (21), and disperses liquid in the combustion exhaust gas so as to remove the incorporated substance included in the combustion exhaust gas; and
the driving air in the ejector has a temperature that is equal to or higher than the temperature at which the dispersed liquid gasifies.

## Patentansprüche

1. Schmelzvorrichtung, umfassend:
einen Schmelzofen (2), der eine Asche verbrennt und schmilzt;
eine sekundäre Brennkammer (8), die über dem Schmelzofen angeordnet ist;
eine Schlackenextraktionsrutsche (7), die eine im Schmelzofen erzeugte Schlacke nach unten führt;
einen Bypasskanal (20), der die Schlackenextraktionsrutsche (7) mit der sekundären Brennkammer (8) verbindet;
einen Ejektor (21; 21A; 21B; 26; 27; 28), der am Bypasskanal vorgesehen ist, aufweisend einen vorderendseitigen Öffnungsabschnitt, der umgeben ist von einem Kontraktionsabschnitt (23), an dem ein Kanalquerschnitt davon verengt ist, und der ein Verbrennungsabgas in den Bypasskanal saugt;
ein Antriebsluftzufuhrrohr (25), das Hochdruckluft (A) vom vorderendseitigen Öffnungsabschnitt, der vom Kontraktionsabschnitt (23) umgeben ist, gegen die stromabwärtige Seite ausstößt, wobei der Ejektor **dadurch gekennzeichnet ist, dass** er umfasst:
eine Adhäsionsverhinderungseinheit (31; 32; 33; 34; 35; 36; 36A; 37; 38), die konfiguriert ist, um zu verhindern, dass sich eine im Verbrennungsabgas enthaltene Substanz an einer Innenwandfläche des Ejektors anlagert,
wobei die Adhäsionsverhinderungseinheit (31; 32; 33; 34; 35; 36; 36A; 37; 38) umfasst:
einen Luftklopfer (41), der an einer Außenwand des Ejektors (21) vorgesehen ist und durch Schlagen gegen die Außenwandfläche des Ejektors (21) Vibration der Innenwandfläche (21a) des Ejektors (21) zuführt, so dass sich die an der Innenwandfläche (21a) des Ejektors (21) angelagerte vorhandene Substanz entfernen lässt; und
eine Luftkanone (42), die Luft zur Innenwandfläche (21a) des Ejektors (21) einspritzt, und
wobei die Luftkanone (42) mit einem vorderseitigen Endabschnitt (42a) vorgesehen ist, der konfiguriert ist zum Einspritzen von Druckluft von einer tieferen Seite als einem vorderendseitigen Öffnungsabschnitt im Antriebsluftzufuhrrohr (25).

2. Schmelzvorrichtung nach Anspruch 1, wobei
die Adhäsionsverhinderungseinheit (31; 32; 33) einen Entfernungsabschnitt (41; 42; 43) für anhaftende Substanz aufweist, der anhaftende Substanz entfernt, die auf der Innenwandfläche des Ejektors angelagert ist.

3. Schmelzvorrichtung nach Anspruch 2, wobei
der Entfernungsabschnitt (43) für anhaftende Substanz ein mechanisches Waschen auf der Innenwandfläche des Ejektors (21B) durchführt.

4. Schmelzvorrichtung nach einem der Ansprüche 1 bis 3, wobei
die Adhäsionsverhinderungseinheit (34; 35) einen Verwirbelungs-Trennabschnitt (44; 22X) aufweist, der stromaufwärts des Kontraktionsabschnitts (23) vorgesehen ist, das eingebrachte Verbrennungsabgas verwirbelt, um eine Wirbelströmung zu bilden, und durch Fliehkraft eine im Wirbelstrom enthaltene enthaltene Substanz trennt.

5. Schmelzvorrichtung nach Anspruch 4, wobei
der Verwirbelungs-Trennabschnitt (44) ein Kühlsystem (44b) aufweist, das die Innenwand (44a) entlang des Wirbelstroms des Verbrennungsabgases kühlt.

6. Schmelzvorrichtung nach Anspruch 4 oder 5, wobei
mehrere der Ejektoren (21) in einer Reihe vorgesehen sind.

7. Schmelzvorrichtung nach einem der Ansprüche 1 bis 6, wobei
die Adhäsionsverhinderungseinheit (36; 36A) einen Luftfilmausbildungsabschnitt (45; 46) aufweist, der einen Luftfilm entlang der Innenwandfläche des Ejektors (27; 28) bildet.

8. Schmelzvorrichtung nach einem der Ansprüche 1 bis 7, wobei
die Adhäsionsverhinderungseinheit (37) mehrere austauschbare Verzweigungskanäle (62A, 62B) umfasst, die am Bypasskanal vorgesehen sind, und die sich auf der stromaufwärtigen Seite verzweigen und mit der stromabwärtigen Seite verbinden; und
wobei jeder der mehreren Verzweigungskanäle einen Ejektor (21) aufweist.

9. Schmelzvorrichtung nach einem der Ansprüche 1 bis 8, wobei
die Adhäsionsverhinderungseinheit (38) einen Flüssigkeitsdispersionsabschnitt (70) umfasst, der stromaufwärts des Ejektors (21) vorgesehen ist, und der Flüssigkeit im Verbrennungsabgas dispergiert, um die im Verbrennungsabgas enthaltene Substanz zu entfernen; und
die Antriebsluft im Ejektor eine Temperatur aufweist, die gleich hoch wie oder höher als die Temperatur ist, bei der die dispergierte Flüssigkeit vergast.

## Revendications

1. Équipement de fusion comprenant :
un four de fusion (2) qui brûle et fait fondre la cendre ;
une chambre de combustion secondaire (8) disposée au-dessus du four de fusion ;
une goulotte d'extraction de laitier (7) qui guide un laitier généré dans le four de fusion vers le bas ;
un canal de dérivation (20) qui raccorde la goulotte d'extraction de laitier (7) et la chambre de combustion secondaire (8) ;
un éjecteur (21 ; 21A ; 21B ; 26 ; 27 ; 28) qui est prévu sur le canal de dérivation, a une partie d'ouverture d'extrémité ouverte entourée par une partie de contraction (23) à laquelle sa section transversale de canal est rétrécie, et aspire un gaz d'échappement de combustion dans le canal de dérivation ;
un tuyau d'alimentation en air d'entraînement (25) qui éjecte l'air à haute pression (A) vers le côté en aval depuis la partie d'ouverture d'extrémité avant entourée par la partie de contraction (23), l'éjecteur étant **caractérisé en ce qu'**il comprend :
une unité anti-adhésion (31 ; 32 ; 33 ; 34 ; 35 ; 36 ; 36A ; 37 ; 38) configurée pour empêcher une substance incorporée qui est incorporée dans le gaz d'échappement de combustion, de se fixer sur une surface de paroi interne de l'éjecteur,
dans lequel l'unité anti-adhésion (31 ; 32 ; 33 ; 34 ; 35 ; 36 ; 36A ; 37 ; 38) comprend :
un marteau pneumatique (41) qui est prévu sur une paroi externe de l'éjecteur (21) et fournit la vibration à la surface de paroi interne (21a) de l'éjecteur (21) en heurtant la surface de paroi externe de l'éjecteur (21) de sorte que la substance incorporée fixée à la surface de paroi interne (21a) de l'éjecteur (21) peut être retirée ; et
une boîte à tir pneumatique (42) qui injecte l'air dans la surface de paroi interne (21a) de l'éjecteur (21), et
dans lequel la boîte à tir pneumatique (42) est prévue avec une partie d'extrémité avant (42a) configurée pour injecter un air comprimé depuis un côté inférieur par rapport à une partie d'ouverture d'extrémité avant prévue dans le tuyau d'alimentation en air d'entraînement (25).

2. Équipement de fusion selon la revendication 1, dans lequel :
l'unité anti-adhésion (31 ; 32 ; 33) a une partie de retrait de surface (41 ; 42 ; 43) fixée qui retire une substance fixée qui est fixée sur la surface de paroi interne de l'éjecteur.

3. Équipement de fusion selon la revendication 2, dans lequel la partie de retrait de substance fixée (43) réalise le lavage mécanique sur la surface de paroi interne de l'éjecteur (21B).

4. Équipement de fusion selon l'une quelconque des revendications 1 à 3, dans lequel :
l'unité anti-adhésion (34 ; 35) a une partie de séparation tourbillonnaire (44 ; 22X) qui est prévue en amont de la partie de contraction (23), fait tourbillonner le gaz d'échappement de combustion introduit afin de former un écoulement tourbillonnaire, et sépare, par centrifugation, une substance incorporée incluse dans l'écoulement tourbillonnaire.

5. Équipement de fusion selon la revendication 4, dans lequel :
la partie de séparation tourbillonnaire (44) a un système de refroidissement (44b) qui refroidit la paroi interne (44a) le long de laquelle l'écoulement tourbillonnaire du gaz d'échappement de combustion s'écoule.

6. Équipement de fusion selon la revendication 4 ou 5, dans lequel :
une pluralité d'éjecteurs (21) est prévue sur une rangée.

7. Équipement de fusion selon l'une quelconque des revendications 1 à 6, dans lequel :
l'unité anti-adhésion (36 ; 36A) a une partie de formation de film d'air (45 ; 46) qui forme un film d'air le long de la surface de paroi interne de l'éjecteur (27 ; 28).

8. Équipement de fusion selon l'une quelconque des revendications 1 à 7, dans lequel :
l'unité anti-adhésion (37) comprend une pluralité de canaux de ramification (62A, 62B) qui est prévue au niveau du canal de dérivation, et se ramifie du côté amont et s'assemble au côté avant ; et
chacun de la pluralité de canaux de ramification a un éjecteur (21).

9. Équipement de fusion selon l'une quelconque des revendications 1 à 8, dans lequel :
l'unité anti-adhésion (38) comprend une partie de dispersion de liquide (70) qui est prévue en amont de l'éjecteur (21) et disperse le liquide dans le gaz d'échappement de combustion afin de retirer la substance incorporée incluse dans le gaz d'échappement de combustion ; et
l'air d'entraînement dans l'éjecteur a une température qui est égale ou supérieure à la température à laquelle le liquide dispersé se gazéifie.
